# EUROPÄISCHE PATENTSCHRIFT

(11) **EP 1 273 236 B1**
(45) Veröffentlichungstag und Bekanntmachung des Hinweises auf die Patenterteilung: **06.10.2004**
(21) Anmeldenummer: 02022794.8
(22) Anmeldetag: 14.07.1997
(51) Int. Cl.: A22C 7/00

(54) **Vorrichtung und Verfahren zur Ausgabe von portionierten Mengen einer fliessfähigen Masse über eine Ausgabeöffnung**
Device and method for dispensing portioned amounts of a flowable mass over the dispensing opening
Dispositif et procédé pour distribuer des portions d'une substance fluide sur l'ouverture de distribution

(30) Priorität: 10.09.1996 DE 19636749; 31.01.1997 DE 19703632
(43) Veröffentlichungstag der Anmeldung: 08.01.2003
(62) Teilanmeldung aus: 97111956.5
(73) Patentinhaber: Heinrich Frey Maschinenbau GmbH, 89542 Herbrechtingen-Bolheim (DE)
(72) Erfinder: Frey, Albert, 89542 Herbrechtingen (DE)
(74) Vertreter: Manitz, Finsterwald & Partner GbR

(56) Entgegenhaltungen:
- US-A- 3 623 188
- US-A- 3 871 085
- US-A- 4 229 859
- US-A- 5 064 667

## Beschreibung

Die vorliegende Erfindung betrifft eine Ausgabevorrichtung zur Ausgabe von portionierten Mengen einer fließfähigen Masse über ein Ausgabeöffnung, insbesondere für scheibenförmige Formlinge aus einer fließfähigen Masse, insbesondere Hackfleischscheiben aus einer Hackfleischmasse für Schabfleischspieße, bei welcher die Größe der ausgegebenen Portionen veränderbar ist. Eine solche Vorrichtung ist aus der US-A-3 871 085 bekannt.

Schabfleischspieße, die hauptsächlich unter der Bezeichnung "Döner Kebab" bekannt sind, sind üblicherweise so aufgebaut, dass flache Hackfleischscheiben im Wechsel mit dünnen Fleischscheiben, die der Armierung dienen, auf einen Spieß gesteckt werden. Der Durchmesser der aufgesteckten Scheiben nimmt dabei zu einem Ende des Spießes hin kontinuierlich zu, so dass ein kompakter konischer Fleischspieß entsteht. Von dem senkrecht in einer Grillvorrichtung rotierbaren Fleischspieß werden dann schichtweise mit einem Messer gegrillte Fleischstücke zum Verzehr abgeschnitten.

Bisher werden derartige Schabfleischspieße vollständig von Hand aufgebaut. Hierzu wird ein Hackfleischballen auf einen Tisch gelegt und von Hand in Hackfleischscheiben der gewünschten Form und Größe zerteilt. Die von Hand hergestellten Hackfleischformlinge werden dann abwechselnd mit Fleischscheiben auf den Spieß gesteckt. Es ist einleuchtend, dass diese Art der Herstellung sehr kostenintensiv ist. Darüber hinaus ist es schwierig, von Hand Hackfleischscheiben mit entsprechend der gewünschten konischen Form des Schabfleischspießes zunehmendem Durchmesser herzustellen.

Der Erfindung liegt die Aufgabe zugrunde, eine Ausgabevorrichtung der eingangs genannten Art anzugeben, durch welche die Herstellung von untereinander verschiedenen scheibenförmigen Formlingen erleichtert werden kann.

Diese Aufgabe wird zum einen durch eine Vorrichtung mit den Merkmalen von Anspruch 1 gelöst.

Zum anderen wird die Aufgabe durch ein Verfahren mit den Merkmalen von Anspruch 5 gelöst.

Durch die erfindungsgemäße Vorrichtung und das erfindungsgemäße Verfahren wird in einfacher und geschickter Weise eine automatische Herstellung von scheibenförmigen Formlingen aus einer vorbereiteten Hackfleischmasse ermöglicht. Die Herstellung von Schabfleischspießen kann dadurch gegenüber der bisherigen, rein manuellen Herstellung deutlich beschleunigt und verbilligt werden.

Bevorzugt kann als Ausgabevorrichtung für die portionierte Hackfleischmasse eine Vakuum- oder Kolbenfüllmaschine vorgesehen sein, wie sie beispielsweise für die Wurstherstellung Verwendung findet. Durch die Verwendung einer vorhandenen und bewährten Maschine wird eine hohe Funktionssicherheit bei gleichzeitig niedrigen Kosten erreicht.

Durch Verändern der Größe der ausgegebenen Portionen lässt sich mit der erfindungsgemäßen Vorrichtung und bei dem erfindungsgemäßen Verfahren in einfacher Weise der Durchmesser der hergestellten Formlinge verändern. Bevorzugt kann dabei auch die Dicke der Formlinge zusammen mit dem Durchmesser verändert werden.

Durch die in Anspruch 1 angegebenen Mittel wird die Handhabung der erfindungsgemäßen Vorrichtung vereinfacht, indem eine gewünschte Portionsgröße aus dem Speicher bei Bedarf abgerufen werden kann. Grundsätzlich ist es dabei möglich, verschiedene Portionsgrößen werksseitig in den Speicher einzugeben. Bevorzugt ist es jedoch, wenn zusätzlich Mittel zum Eingeben von Portionsgrößen in den Speicher vorhanden sind. Die Portionsgrößen können dann vorteilhafterweise von dem Benutzer nach eigenen Wünschen eingegeben werden.

Nach der Erfindung ist mindestens eine Abfolge von Portionsgrößen speicherbar. So können beispielsweise für die Herstellung von Schabfleischspießen abnehmende Portionsgrößen als Abfolge gespeichert werden, um die übliche konische Form der Schabfleischspieße automatisch zu erzeugen. Bevorzugt können hierbei mehrere Abfolgen speicherbar sein, um verschiedene Formen nach Bedarf abrufen zu können.

Erfindungsgemäß können in der Abfolge beispielsweise die Dicke der Formlinge, deren Durchmesser und deren Anzahl variierbar sein. Auf diese Weise ist eine weite Variationsmöglichkeit gegeben, beispielsweise können Schabfleischspieße unterschiedlicher Form und Größe automatisch und einfach abrufbar sein.

Durch eine nach unten weisend am Ende eines an der Ausgabevorrichtung vorhandenen Füllrohres vorgesehene Ausgabeöffnung erreicht man eine gute Zugänglichkeit der Ausgabeöffnung, so dass die Auflage für die Hackfleischmasse in einfacher Weise unter der Ausgabeöffnung positionierbar ist.

Als Auflage für die Hackfleischmasse kann mindestens ein bevorzugt in der Höhe verstellbarer Teller vorgesehen sein. Insbesondere können mehrere Teller auf einem bevorzugt fahrbar ausgebildeten Gestell angeordnet und auf diesem abwechselnd unter die Ausgabeöffnung verfahrbar sein. Die Teller können dadurch nacheinander unter der Ausgabeöffnung angeordnet werden, um in rascher Folge Hackfleischscheiben in gewünschter Weise herzustellen.

Die Teller können mit einem nach unten weisenden Stift in einer Hülse gelagert sein, welche auf einer auf dem Gestell angebrachten Fördereinrichtung befestigt ist. Die Teller können dadurch schnell und einfach zur Reinigung oder zum Ersatz von dem Gestell entnommen werden.

Das automatische Verfahren der Teller kann dadurch ermöglicht sein, dass die Hülsen jeweils aufrecht um eine Ausnehmung einer kreisförmigen Scheibe angeordnet sind, wobei die in einer gemeinsamen Führungsbahn verschiebbar eingesetzten angeordneten Scheiben durch mindestens ein zu ihrem Umfang reziprok ausgebildetes Zahnrad antreibbar sind. Auch die zum Antrieb der Teller dienenden Scheiben sind dadurch zur Reinigung oder zum Ersatz leicht aus dem Gestell entnehmbar. Die Verwendung einer schlecht reinigbaren Kette wird vermieden. Bevorzugt bestehen die Scheiben aus Kunststoff, was ebenfalls der leichten Reinigung und Handhabbarkeit zugute kommt.

Durch einen unterhalb der Ausgabeöffnung angeordneten Hubzylinder, der von unten in die Hülse der jeweils unter der Ausgabeöffnung angeordneten Scheibe einführbar ist, kann der Teller in einfacher und geschickter Weise angehoben und abgesenkt werden, um die zur Ausbildung des Formlings erforderliche Position einzunehmen, in welcher die Hackfleischmasse zwischen Teller und Gegenplatte komprimiert wird. An dem Teller kann dabei auch ein in Richtung auf die Ausgabeöffnung bzw. die Gegenplatte vorgespanntes Federelement angreifen.

Als Auflage kann ein auf einem Gestell angeordnetes, umlaufendes Endlosband vorgesehen sein, welches sich mit jeweils einem Abschnitt unterhalb der Ausgabeöffnung befindet. Zur Formung der Hackfleischscheibe kann zumindest der unter der Ausgabeöffnung befindliche Abschnitt des Bandes heb- und senkbar ausgestaltet sein. Alternativ kann aber auch die Ausgabeöffnung mitsamt der Gegenplatte heb- und senkbar sein.

Dadurch können Hackfleischscheiben durch entsprechendes Heben und Senken des Endlosbandes bzw. der Ausgabeöffnung mitsamt der Gegenplatte ausgeformt werden.

An der Gegenplatte kann eine Abschneidvorrichtung mit einem durch einen Rollenschlitten verfahrbaren, bevorzugt austauschbaren Messer vorgesehen sein. Mit der Abschneidvorrichtung kann der Formling nach beendeter Komprimierung der Hackfleischmasse sauber von der Gegenplatte gelöst werden. Durch eine bevorzugt federnd gelagerte Abstreifvorrichtung für das Messer kann dieses in vorteilhafter Weise sauber gehalten werden.

Um eine manuelle Entnahme der fertigen Formlinge von den Tellern zu ermöglichen, kann an dem Gestell mindestens ein Arbeitsplatz ausgebildet sein. An diesem Arbeitsplatz kann der fertige Formling von dem jeweiligen Teller entnommen werden, um diesen abwechselnd mit den Fleischscheiben auf einen Spieß aufzubringen.

Zur Ausbildung des Formlings kann die Auflage, ausgehend von einer unteren Position, nach beendeter Ausgabe einer Hackfleischportion unter Komprimierung der Masse angehoben werden. Die Auflage wird also zunächst unterhalb der Ausgabeöffnung angeordnet und erst anschließend nach Ausgabe der jeweiligen Portion angehoben. Eine andere Möglichkeit besteht darin, die Auflage vor Beginn der Ausgabe einer Portion direkt benachbart zur Ausgabeöffnung anzuordnen und die Auflage durch den Druck der ausgegebenen Masse entgegen einer Vorspannung nach unten zu drücken. Auch auf diese Weise wird die Masse zwischen Auflage und Gegenplatte komprimiert.

Des weiteren besteht auch die Möglichkeit, die Auflage vor dem Ausgeben einer Portion in einem der Solldicke des Formlings entsprechenden Abstand zur Gegenplatte anzuordnen und sie dort während der Ausgabe zu halten. Durch Herausdrücken der vollständigen Portion aus der Ausgabeöffnung wird so ebenfalls eine Komprimierung der Masse zwischen Auflage und Gegenplatte und eine Ausbildung der gewünschten Form erreicht.

Schließlich besteht auch die Möglichkeit, anstelle der Auflage die Ausgabeöffnung mitsamt Gegenfläche entsprechend den drei zuvor beschriebenen Varianten zu bewegen, also entweder erst nach dem Ausgeben einer Hackfleischportion nach unten zu fahren, um die Hackfleischmasse zu komprimieren, oder bereits vor dem Ausgeben der Portion in einer abgesenkten Position zu halten, in welcher der Abstand zur Auflage der gewünschten Dicke der Hackfleischscheibe entspricht oder sich durch elastisches Zurückweichen einer der beiden Elemente einstellt.

Ausführungsbeispiele der Erfindung sind in der Zeichnung dargestellt und werden nachfolgend beschrieben. Es zeigen, jeweils in schematischer Darstellung,
- Fig. 1: eine Seitenansicht einer erfindungsgemäßen Vorrichtung mit Zusatzeinrichtungen,
- Fig. 2: eine um 90° gedrehte Seitenansicht der Vorrichtung von Fig. 1
- Fig. 3: eine Draufsicht auf die Oberseite der Vorrichtung von Fig. 1, und
- Fig. 4: eine Draufsicht auf die Eingabetastatur einer erfindungsgemäßen Ausgabevorrichtung.

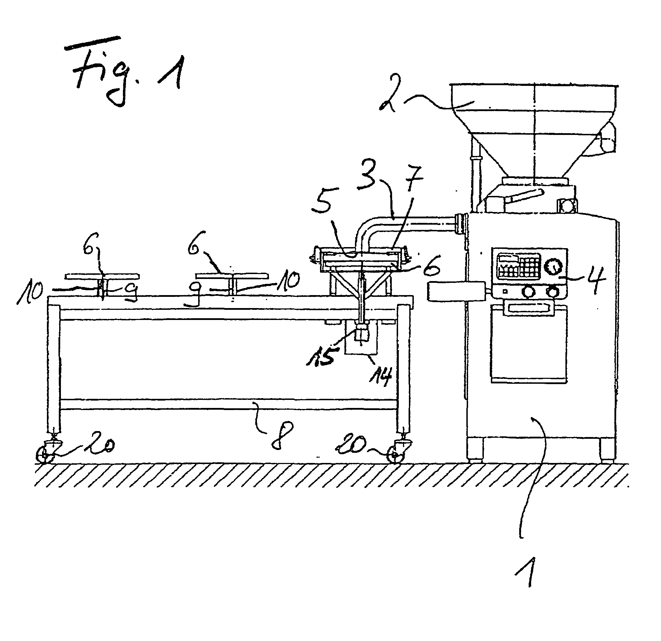

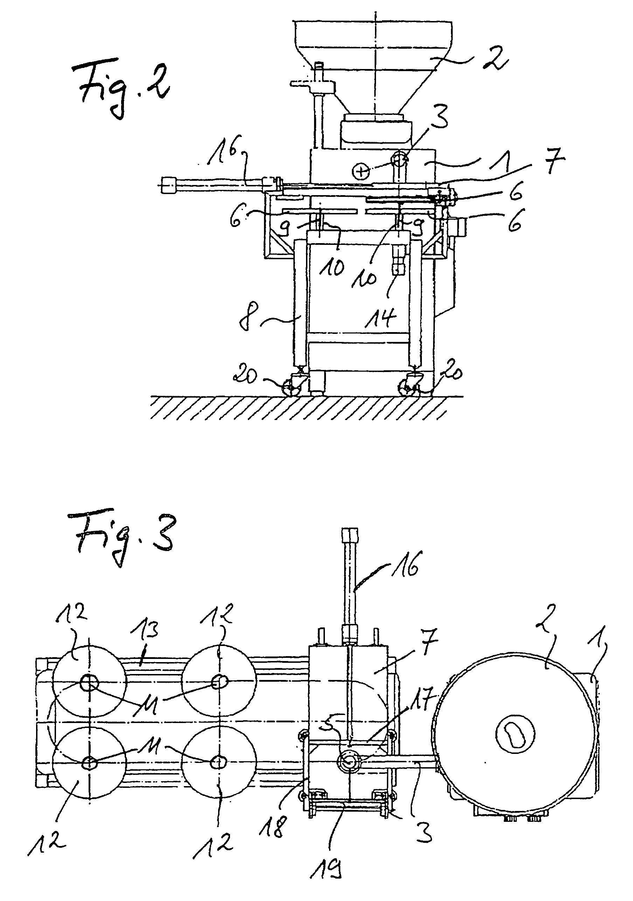

Die in den Fig. 1 bis 4 dargestellte Vorrichtung umfasst eine als Ausgabevorrichtung dienende Vakuum- oder Kolbenfüllmaschine 1, wie sie zur Wurstherstellung bekannt ist. Die Füllmaschine 1 weist einen Einfülltrichter 2 zum Eingeben und gegebenenfalls Vermengen einer Hackfleischmasse auf, aus welchem die fertige Hackfleischmasse über eine hier nicht erkennbare Fördereinrichtung in ein Füllrohr 3 gefördert wird. Über eine Steuereinrichtung 4 ist eine portionsweise Ausgabe der Hackfleischmasse durch das Füllrohr 3 möglich.

Das Füllrohr 3 ist nach unten abgewinkelt und weist eine nach unten weisende Ausgabeöffnung 5 auf, aus welcher die Hackfleischmasse auf einen unterhalb der Ausgabeöffnung 5 angeordneten Teller 6 ausgegeben werden kann. Dem Teller 6 gegenüberliegend und die Ausgabeöffnung 5 umgebend ist am Ende des Füllrohres 3 eine Gegenplatte 7 vorgesehen, die zusammen mit dem Teller 6 zur Komprimierung der ausgegebenen Hackfleischmasse und Ausformung der Hackfleischscheibe dient.

Der Teller 6 ist zusammen mit weiteren Tellern 6 - im dargestellten Ausführungsbeispiel sind es insgesamt sechs Teller 6 - auf einem fahrbar ausgebildeten Gestell 8 angeordnet. Die Teller 6 sind jeweils mit nach unten weisenden Stiften 9 in einer Hülse 10 gelagert, die um eine Öffnung 11 auf einer Scheibe 12 befestigt ist. Im dargestellten Ausführungsbeispiel sind also auch sechs Scheiben 12 vorhanden. Diese sind längs einer geschlossenen ovalen Bahn 13 verschiebbar geführt, wobei zur Verschiebung der Scheiben 12 längs der Bahn 13 mindestens ein zum Umfang der Scheiben 12 reziprok ausgebildetes, hier nicht dargestelltes Zahnrad vorgesehen sein kann, welches mit den Scheiben 12 kämmend rotiert. Durch Verschieben der Scheiben 12 längs der Führungsbahn 13 können die Teller 6 nacheinander unter die Ausgabeöffnung 5 der Füllmaschine 1 verfahren werden.

Unterhalb der Ausgabeöffnung 5 des Füllrohres 3 und unterhalb der Ebene der Scheiben 12 ist an dem Gestell 8 eine Hubvorrichtung 14 mit einem Hubzylinder 15 angeordnet, der von unten her durch die Ausnehmung 11 der Scheibe 12 in die Hülse 10 einfahrbar ist. Die Hubvorrichtung 14 ist so ausgestaltet, dass der Hubzylinder 15 den Teller 6 über den Stift 9 auf eine gewünschte Höhe einstellen kann.

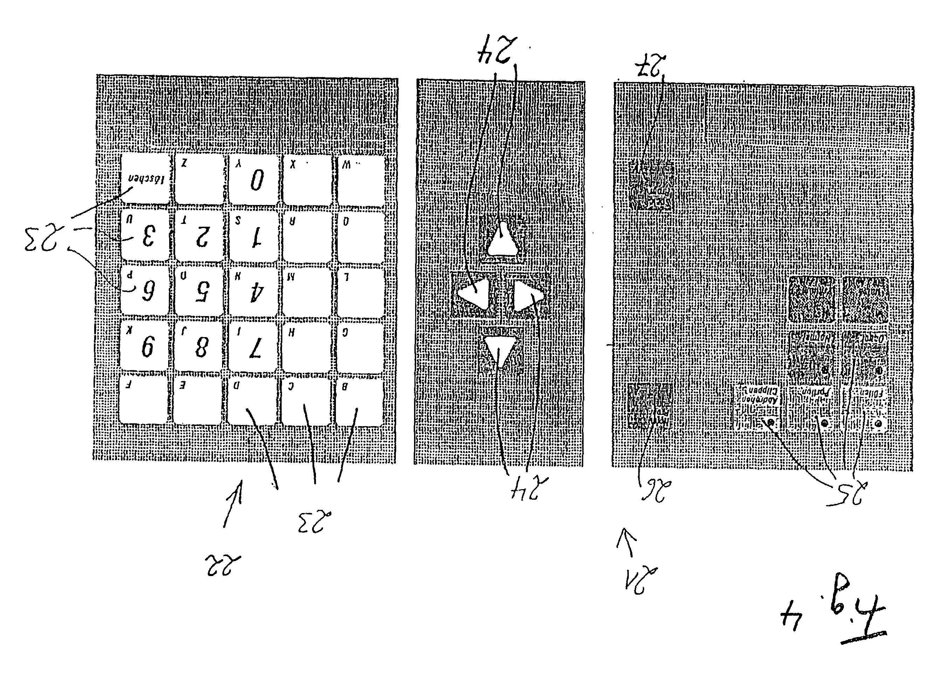

Der Hubzylinder 15 ist durch die an der Füllmaschine 1 vorhandene Steuerung 4 in Abhängigkeit von der gewünschten Größe des Formlings steuerbar. Die Eingabetastatur 21 der Steuerung 4 ist im einzelnen in Fig. 4 dargestellt. Sie umfasst ein alphanumerisches Tastenfeld 22 mit fünfundzwanzig Eingabetasten 23, von denen eine als Löschtaste ausgeführt ist, vier Pfeiltasten 24, sieben Funktionstasten 25 sowie eine Abruftaste 26 und eine Speichertaste 27 zum Abrufen bzw. Speichern einer eingegebenen Abfolge von Portionsgrößen. Außerdem umfasst die Steuerung 4 eine nur in Fig. 1 angedeutete Anzeigevorrichtung 28. Die Tasten 23 bis 27 sind bevorzugt als Folientastatur ausgebildet, die Anzeigevorrichtung ist bevorzugt eine Flüssigkristallanzeige.

Über die Pfeiltasten 24 können verschiedene Programmpunkte wie Eingabemenü und Eingabegröße ausgewählt werden. Über die alphanumerische Tastatur 22 können Eingabewerte, wie beispielsweise ein gewünschtes Gewicht und ein gewünschter Durchmesser der Formlinge sowie die Anzahl der so herzustellenden Formlinge eingegeben werden, wobei diese Eingaben mit der Löschtaste gelöscht werden können. Eine derartige Abfolge kann zum Beispiel zehn Formlinge umfassen, deren Durchmesser und/oder Dicke kontinuierlich abnimmt. Wie bereits ausgeführt, kann ein im Speicher vorhandenes Programm durch die Abruftaste 26 abgerufen werden, während mit der Speichertaste 27 ein über die Eingabetastatur 21 erstelltes Programm im Speicher ablegbar ist. Die übrigen Funktionstasten 25 sind anderen Steuergrößen zugeordnet, wie beispielsweise Einund Ausschalten der Pumpe und der Einstellung der Betriebsweise der Vorrichtung.

Mit der erfindungsgemäßen Ausgabevorrichtung können Abfolgen von unterschiedlichen auszugebenden Portionen, die zuvor gespeichert wurden, abgerufen und automatisch ausgeführt werden. Daher können beispielsweise verschiedene Schabfleischspieße nacheinander durch Abrufen des entsprechenden Programms einfach hergestellt werden. Die Eingabe kann insbesondere durch eine geschulte Person erfolgen, während das Abrufen eines bestimmten Programmes keine besondere Einweisung erfordert.

Wie zuvor beschrieben, kann der Teller dabei entweder erst nach der Ausgabe einer Hackfleischportion zur Komprimierung der Masse zwischen Teller 6 und Gegenplatte 7 angehoben werden oder der Teller 6 kann bereits vor Ausgabe der Hackfleischportion angehoben werden, und zwar entweder so, dass er einen Abstand zu der Gegenplatte 7 aufweist, der der gewünschten Dicke des Formlings entspricht oder aber der Ausgabeöffnung 5 des Füllrohres 3 direkt benachbart. In diesem letzten Falle ist der Teller 6 zusätzlich durch ein Federelement abgestützt, so dass die Hackfleischmasse entgegen dieser Federkraft ausgegeben und dadurch zwischen Teller 6 und Gegenplatte 7 in der gewünschten Weise komprimiert wird.

Wie man insbesondere in Fig. 3 erkennt, ist an der Gegenplatte 7 eine Abschneidvorrichtung 16 für den fertiggestellten Formling von der Gegenplatte 7 vorgesehen. Die Abschneidvorrichtung 16 umfasst ein austauschbares Messer 17, welches durch einen Rollenschlitten 18 so geführt ist, dass sich das Messer 17 längs der zum Teller 6 weisenden Unterseite der Gegenplatte 7 bewegt. An einem Ende der Bewegungsbahn des Messer 17 ist zudem eine Abstreifvorrichtung 19 angeordnet, in welche das Messer 17 am Ende jedes Abschneidvorganges einläuft. Durch einen federnd gelagerten Abstreifer wird dabei am Messer 17 haftende Hackfleischmasse entfernt.

Wie man in Fig. 1 erkennt, ist das Gestell 8 mit Rollen 20 versehen, so dass das Gestell beispielsweise zu Reinigungszwecken verfahrbar ist. Das Reinigen wird dadurch weiter erleichtert. Wie man in Fig. 3 erkennt, umfasst das Gestell 8 im dargestellten Ausführungsbeispiel sechs Scheiben 12, die in einer oval geschlossenen Führungsbahn 13 verfahrbar sind. Jeweils zwei auf den Scheiben 12 angeordnete Teller 6 befinden sich beim Betrieb der Vorrichtung im Bereich der Füllmaschine 1, während sich die übrigen vier Teller 6 in einem frei zugänglichen Bereich des Gestells 8 befinden. Die Positionen der vier freien Teller 6 können daher als Arbeitsplätze eingerichtet sein, an denen die fertiggestellten Hackfleischscheiben insbesondere manuell von den Tellern 6 gelöst und auf Spieße aufgebracht werden können.

Zum Betrieb der Vorrichtung werden die Teller 6 nacheinander unterhalb der Ausgabeöffnung 5 positioniert. Daraufhin fährt der Hubzylinder 15 in die Hülse 10 ein und hebt den jeweiligen Teller 6 über den Stift 9 auf die gewünschte Höhe an. Von der Füllmaschine 1 wird dann eine Portion Hackfleischmasse auf den Teller 6 ausgegeben. Sofern sich der Teller 6 nicht gemäß einer der beiden oben beschriebenen Varianten ohnehin bereits in einer komprimierenden Stellung befindet, wird dann der Teller 6 durch den Druckzylinder 15 gemäß der dritten Variante weiter angehoben, um die Hackfleischmasse zwischen Teller 6 und Gegenplatte 7 in der gewünschten Weise zu komprimieren und dadurch eine Hackfleischscheibe mit gewünschter Dicke und Durchmesser herzustellen.

Nach Fertigstellung der Hackfleischscheibe wird diese durch Entlangfahren des Messers 17 an der Unterseite der Gegenplatte 7 von dieser gelöst, wobei das Messer bis in die Abstreifvorrichtung 19 weiterfährt, um von anhaftendem Hackfleisch gereinigt zu werden. Nach Lösen der Hackfleischscheibe von der Gegenplatte 7 wird der Hubzylinder 15 und damit der Teller 6 wieder abgesenkt. Nun wird der Teller 6 längs der Führungsbahn 13 weiter verfahren und ein neuer Teller 6 gelangt unter die Ausgabeöffnung 5 des Füllrohres 3, mit dem dann wieder in der zuvor beschriebenen Weise die nächste Hackfleischscheibe geformt wird usw.

Die Teller 6 laufen also gemeinsam längs der Führungsbähn 13 um und werden, sobald sie sich unter der Ausgabeöffnung 5 befinden, zur Ausbildung einer Hackfleischscheibe angehoben. An den vier außerhalb des Formbereichs gelegenen Positionen der Teller 6 werden die fertiggestellten Hackfleischscheiben beispielsweise mittels eines Messers von den Tellern 6 gelöst und auf vorbereitete Spieße gesteckt.

### Bezugszeichenliste

- 1: Füllmaschine
- 2: Einfülltrichter
- 3: Füllrohr
- 4: Steuerung
- 5: Ausgabeöffnung
- 6: Teller
- 7: Gegenplatte
- 8: Gestell
- 9: Stift
- 10: Hülse
- 11: Ausnehmung
- 12: Scheibe
- 13: Führungsbahn
- 14: Hubvorrichtung
- 15: Hubzylinder
- 16: Abschneidevorrichtung
- 17: Messer
- 18: Rollenschlitten
- 19: Abstreifvorrichtung
- 20: Rad
- 21: Eingabetastatur
- 22: alphanumerisches Tastenfeld
- 23: Eingabetaste
- 24: Pfeiltaste
- 25: Funktionstaste
- 26: Abruftaste
- 27: Speichertaste
- 28: Anzeigevorrichtung

## Patentansprüche

1. Ausgabevorrichtung zur Ausgabe von portionierten Mengen einer fließfähigen Masse über eine Ausgabeöffnung (5), insbesondere für scheibenförmige Formlinge aus einer fließfähigen Masse, insbesondere Hackfleischscheiben aus einer Hackfleischmasse für Schabfleischspieße, bei welcher
die Größe der ausgegebenen Portionen veränderbar ist,
**dadurch gekennzeichnet,**
**dass** Mittel zum abrufbaren Speichern einer auszugebenden Portionsgröße und Mittel (21) zum Eingeben von Portionsgrößen in den Speicher vorgesehen sind, wobei mindestens eine Abfolge von Portionsgrößen speicherbar ist.

2. Vorrichtung nach Anspruch 1,
**dadurch gekennzeichnet,**
**dass** die Dicke, der Durchmesser und/oder die Anzahl der Formlinge in der Abfolge variierbar ist.

3. Vorrichtung nach einem der vorhergehenden Ansprüche,
**dadurch gekennzeichnet, dass** die Ausgabeöffnung (5) nach unten weisend am Ende eines an der Ausgabevorrichtung (1) vorhandenen Füllrohres (3) vorgesehen ist.

4. Vorrichtung nach einem der vorhergehenden Ansprüche,
**dadurch gekennzeichnet,**
**dass** die Ausgabeöffnung (5) heb- und senkbar ist.

5. Verfahren zur Ausgabe von portionierten Mengen einer fließfähigen Masse über eine Ausgabeöffnung (5), insbesondere für Hackfleischscheiben aus einer Hackfleischmasse für Schabfleischspieße,
**dadurch gekennzeichnet,**
**dass** die Größe der ausgegebenen Portion zur Erzeugung von Formlingen mit unterschiedlichem Durchmesser und/oder unterschiedlicher Dicke gemäß einer gespeicherten Abfolge verändert wird.

6. Verfahren nach Anspruch 5,
**dadurch gekennzeichnet,**
**dass** die Ausgabeöffnung (5) vor oder nach der Ausgabe in Ausgaberichtung bewegt wird.

## Claims

1. Dispensing apparatus for the dispensing of portioned quantities of a flowable composition via a dispensing opening (5), in particular for slice-like shaped bodies of a flowable composition, in particular minced meat slices of a minced meat composition for carved meat spits, in which the size of the dispensed portions can be changed,
**characterised in that**
means are provided for the retrievable storage of a portion size to be dispensed and means (21) are provided for the inputting of the portion sizes into the memory, wherein at least one sequence of portion sizes can be stored.

2. Apparatus in accordance with claim 1,
**characterised in that**
the thickness, the diameter and/or the number of the shaped bodies in the sequence can be varied.

3. Apparatus in accordance with one of the preceding claims,
**characterised in that**
the dispensing opening (5) is provided pointing downwardly at the end of a filling tube (3) present in the dispensing apparatus (1).

4. Apparatus in accordance with any one of the preceding claims,
**characterised in that**
the dispensing opening (5) can be lifted and lowered.

5. Method for the dispensing of portioned quantities of a flowable composition from a dispensing opening (5), in particular for minced meat slices of a minced meat composition for carved meat spits,
**characterised in that**
the size of the portions to be dispensed for the production of shaped bodies of different diameter and/or different thickness is changed in accordance with a stored sequence.

6. Method in accordance with claim 5,
**characterised in that**
the dispensing opening (5) is moved in the dispensing direction before or after the dispensing.

## Revendications

1. Dispositif de distribution pour la distribution de quantités par portions d'une masse capable de s'écouler via une ouverture de distribution (5) en particulier pour des ébauches en forme de disques à partir d'une masse capable de s'écouler, en particulier des disques de viande hachée à partir d'une masse de viande hachée pour réaliser des brochettes de viande à racler, dans lequel la taille des portions distribuées est modifiable,
**caractérisé en ce que**
des moyens sont prévus pour mémoriser de manière lisible une taille de portion à distribuer et des moyens (21) sont prévus pour saisir des tailles de portion dans la mémoire, et
au moins une succession de tailles de portion est mémorisable.

2. Dispositif selon la revendication 1, **caractérisé en ce que** l'épaisseur, le diamètre et/ou le nombre des ébauches dans la succession sont variables.

3. Dispositif selon l'une des revendications précédentes, **caractérisé en ce que** l'ouverture de distribution (5) est prévue tournée vers le bas à l'extrémité d'un tube de remplissage (3) existant dans le dispositif de distribution (1).

4. Dispositif selon l'une des revendications précédentes, **caractérisé en ce que** l'ouverture de distribution (5) peut être soulevée et abaissée.

5. Procédé pour la distribution de quantités par portions d'une masse capable de s'écouler via une ouverture de distribution (5), en particulier pour des disques de viande hachée à partir d'une masse de viande hachée pour des brochettes de viande à racler,
**caractérisé en ce que** :
la taille de la portion distribuée est modifiée pour produire des ébauches avec des diamètres différents et/ou des épaisseurs différentes selon une succession mémorisée.

6. Procédé selon la revendication 5, **caractérisé en ce que** l'ouverture de distribution (5) est déplacée dans la direction de distribution avant ou après la distribution.
